# EUROPEAN PATENT APPLICATION

(11) **EP 4 585 833 A1**
(43) Date of publication of application: **16.07.2025**
(21) Application number: 24151407.4
(22) Date of filing: 11.01.2024
(51) Int. Cl.: F16J 15/00, F16J 15/32

(54) **METHOD AND ARRANGEMENT FOR SEALING A PROPELLER SHAFT OF A MARINE VESSEL**

(71) Applicant: ABB Oy, 00380 Helsinki (FI)
(72) Inventor: PELLINEN, Petri, 00980 Helsinki (FI); KEKKI, Tuomas, 00980 Helsinki (FI)
(74) Representative: Boco IP Oy Ab

(57) **Abstract**

Presented is a method and an arrangement for sealing a propeller shaft (1) of a marine vessel (2). A propeller (5) is attached to a driving end (6) of the propeller shaft (1) that projects out of a pod (3) that is suspended at a hull (4) of the marine vessel (2), and the propeller shaft (1) is rotatable supported with at least one bearing (8) that is arranged in a bearing housing (9) in the pod (3). The bearing housing (9) is provided with a ring member (12) that is provided with an additional seal ring (13) that surrounds the propeller shaft (1) and that is movable by means of moving means (14) with respect to the propeller shaft (1) from an inactivated position into an activated position.

## Description

### Field of the invention

The invention relates to a method for sealing a propeller shaft of a marine vessel as defined in the preamble of independent claim 1 method for sealing a propeller shaft of a marine vessel, wherein the propeller shaft is arranged at a pod that is suspended at a hull of the marine vessel, wherein a propeller is attached to a driving end of the propeller shaft, wherein the driving end projects out of the pod, wherein the propeller shaft has a non-driving section that is inside the pod, wherein the propeller shaft is rotatable supported with at least one bearing that is arranged in a bearing housing in the pod, wherein the bearing housing has an opening, wherein the propeller shaft projects out of the opening of the bearing housing, and wherein at least one seal ring is provided between the opening of the bearing housing and said at least one bearing that is arranged in the bearing housing, wherein said at least one seal ring is attached to the bearing housing and engaging the outer circumference of the propeller shaft.

The invention also relates to an arrangement for sealing a propeller shaft of a marine vessel as defined in the preamble of independent claim 12 arrangement for sealing a propeller shaft of a marine vessel, wherein the propeller shaft is arranged at a pod that is suspended at a hull of the marine vessel, wherein a propeller is attached to a driving end of the propeller shaft, wherein the driving end projects out of the pod, wherein the propeller shaft has a non-driving section that is inside the pod, wherein the propeller shaft is rotatable supported with at least one bearing that is arranged in a bearing housing in the pod, wherein the bearing housing has an opening, wherein the propeller shaft projects out of the opening of the bearing housing, and wherein at least one seal ring is provided between the opening of the bearing housing and said at least one bearing that is arranged in the bearing housing, wherein said at least one seal ring is attached to the bearing housing and engaging the outer circumference of the propeller shaft.

A problem with the above-presented method and arrangement is wearing of the seal rings, which means that the seal rings must be replaced when they have reached the end of their service life. Such seal rings, which are in a pod can however be difficult to replace especially if the pod is small, which means that it can be difficult to access the seal rings from the inside of the pod.

### Objective of the invention

The object of the invention is to provide a method and an arrangement making replacing of seal rings easier.

### Short description of the invention

The method of the invention is characterized by the definitions of independent claim 1.

Preferred embodiments of the method are defined in the dependent claims 2 to 11.

The arrangement of the invention is correspondingly characterized by the definitions of independent claim 12.

Preferred embodiments of the arrangement are defined in the dependent claims 13 to 22.

### List of figures

In the following the invention will described in more detail by referring to the figures, of which
Figures 1 and 2 shows the working principle of a first embodiment of the method and the arrangement,

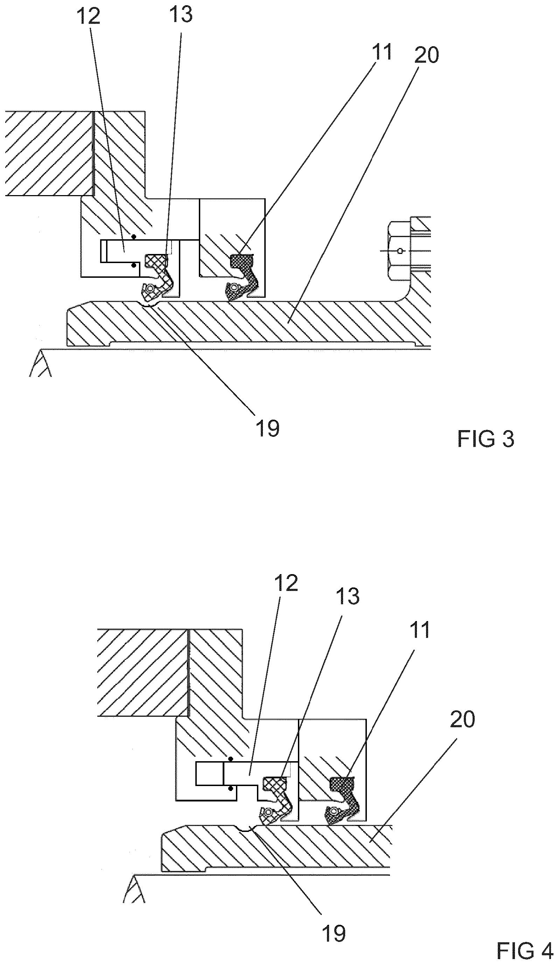

Figures 3 and 4 shows the working principle of a second embodiment of the method and the arrangement,
Figures 5 and 6 shows the working principle of a third embodiment of the method and the arrangement,
Figures 7 and 8 shows the working principle of a fourth embodiment of the method and the arrangement,
Figures 9 and 10 shows the working principle of a fifth embodiment of the method and the arrangement,

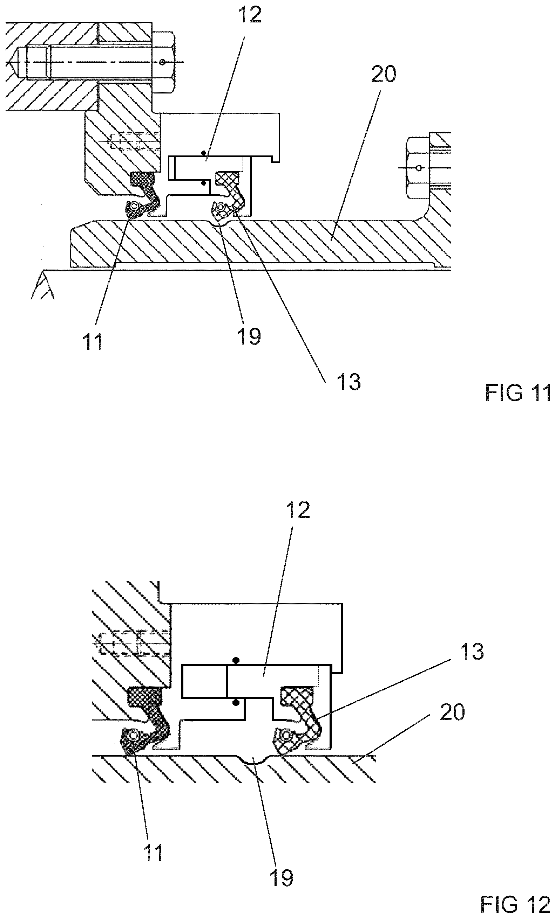

Figures 11 and 12 shows the working principle of a sixth embodiment of the method and the arrangement,
Figure 13 shows detail of a seventh embodiment of the method and the arrangement,
Figure 14 shows a second embodiment of the method and of the arrangement, and
Figures 15 and 16 show the working principle of an eighth embodiment of the method and the arrangement.

### Detailed description of the invention

First the method for sealing a propeller shaft 1 of a marine vessel 2 and some embodiments and variants of the method will be described in greater detail.

In the method the propeller shaft 1 is arranged at a pod 3 that is suspended at a hull 4 of the marine vessel 2.

The pod 3 can be fixedly suspended at the hull 4 of the marine vessel 2. It is also possible that the pod 3 is about a pivot axis (not illustrated) suspended at the hull 4 of the marine vessel 2. Inside the pod 3 can an electric motor (not illustrated) be provided for rotating the propeller shaft 1. It is also possible that the pod comprises a mechanical power transmission arrangement for rotating the propeller shaft 1 by means of a motor arranged as housed by the hull 4 of the marine vessel 1.

In the method a propeller 5 is attached to a driving end 6 of the propeller shaft 1, wherein the driving end 6 projects out of the pod 3. The propeller shaft 1 can additionally have a second driving end (not illustrated) that projects out of an opposite end of the pod 3 i.e. so that the propeller projects through the pod and so that a second propeller (not illustrated) is provided as the second driving end.

In the method the propeller shaft 1 has a non-driving section 7 that is inside the pod 3.

In the method the propeller shaft 1 is rotatable supported with at least one bearing 8 that is arranged in a bearing housing 9 in the pod 3.

In the method the bearing housing 9 has an opening 10.

In the method the propeller shaft 1 projects out of the opening 10 of the bearing housing 9.

In the method at least one seal ring 11 is provided between the opening 10 of the bearing housing 9 and said at least one bearing 8 that is arranged in the bearing housing 9, wherein said at least one seal ring 11 is attached to the bearing housing 9 and engaging the outer circumference of the propeller shaft 1.

The propeller shaft 1 can comprise a liner 20 that at least partly forms the outermost part of the propeller shaft 1. In the figures, the liner 20 forms the outermost part of the propeller shaft 1 at least in the region of the seal rings 11.

The method includes providing the bearing housing 9 with a ring member 12 that surrounds the propeller shaft 1 and that is movable with respect to the propeller shaft 1. The ring member 12 is preferably, but not necessarily, movable in an axial direction with respect to the propeller shaft 1. It is also possible that the ring member 12 is movable in a radial direction with respect to the propeller shaft 1 or in a combination of a radial and an axial direction with respect to the propeller shaft 1. It is also possible that the ring member 12 comprises at least two arcs (not illustrated in the figures) movable with respect to one another and with respect to the propeller shaft 1 and which said at least two arcs together forms the ring member 12.

The method includes providing an additional seal ring 13 at the ring member 12 and so that the additional seal ring 13 surrounds the propeller shaft 1. The additional seal ring 13 can be a separate part that is attached to the ring member 12. It is also possible that the additional seal ring 13 and the ring member 12 forms a monolithic structure so that the additional seal ring 13 is an integrated part of the ring member 12.

The method includes providing a moving means 14 for moving the ring member 12 with respect to the propeller shaft 1, preferably, but not necessarily, in an axial direction of the propeller shaft 1 so that the additional seal ring 13 moves from an inactivated position, where the additional seal ring 13 is spaced apart from the outer circumference of the propeller shaft 1 and/or is in an sealingly unengaging position with the outer circumference of the propeller shaft 1 into an activated position, where the additional seal ring 13 engages the outer circumference of the propeller shaft 1. Sealingly unengaging position with the outer circumference of the propeller shaft 1 means in this context that there can be a light contact between the additional seal ring 13 and the outer circumference of the propeller shaft 1, which light contact is uncapable of preventing fluid from passing between the outer circumference of the propeller shaft 1 and the additional seal ring 13.

The method includes moving the ring member 12 with respect to the propeller shaft 1, preferably, but not necessarily, in an axial direction of the propeller shaft 1 by means of moving means 14 so that the additional seal ring 13 moves from the inactivated position into the activated position.

Because of the provision of the ring member 12 having an additional seal ring 13 attached thereto and because of the provision of the moving means 14 for moving the ring member 12 with respect to the propeller shaft 1 so that the additional seal ring 13 moves from the inactivated position, where the additional seal ring 13 is spaced apart from the outer circumference of the propeller shaft 1 into the activated position, where the additional seal ring 13 engages the outer circumference of the propeller shaft 1, a worn out seal ring 11 can easily be replaced also in situations where limited access to the worn out seal ring 11 is available.

The method can include providing the bearing housing 9 with a ring chamber 15 so that the ring chamber 15 surrounds the propeller shaft 1 and so that the ring chamber 15 is partly limited by the ring member 12. In such case, the moving means 14 that is provided comprises a fluid feeding means 16 for feeding fluid into the ring chamber 15 to effect moving of the ring member 12 to effect moving of the additional seal ring 13 from the inactivated position into the activated position.

The moving means 14 that is provided can alternatively or additionally comprise one of a mechanical moving means, a pneumatic moving means, a hydraulic moving means, and an electromechanical moving means or a combination of at least two of a hydraulic moving means, a mechanical moving means, a pneumatic moving means, and an electromechanical moving means. The moving means 14 can for example comprise at least one of at least one hydraulic or pneumatic cylinder and at least one mechanical or electromechanical actuator.

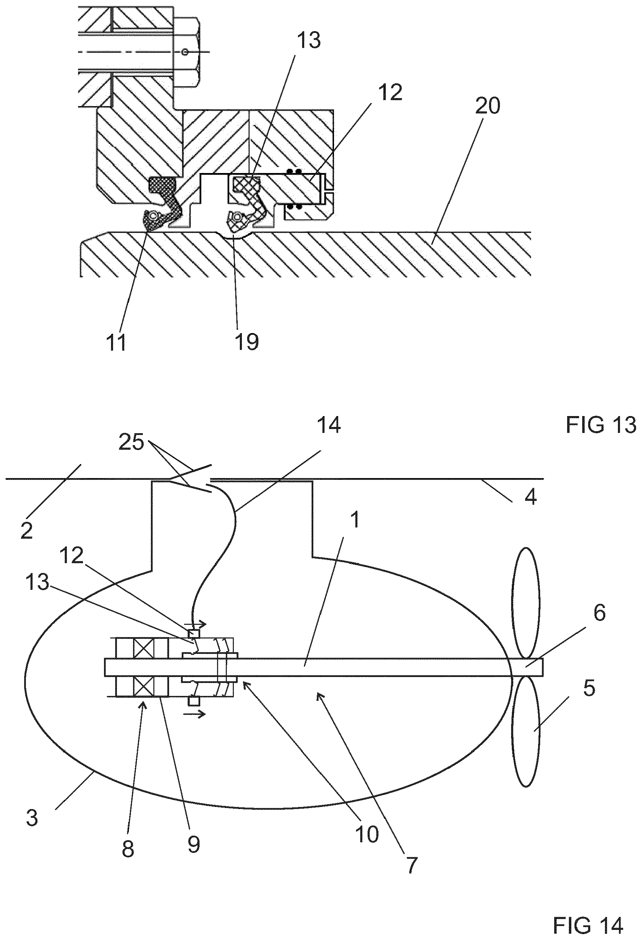

The moving means 14 that is provided can be remotely operable from the outside of the pod 3, such as from a position within the marine vessel 2, wherein the method comprises operating the moving means 14 from the outside of the pod 3 such as from the marine vessel 2, as illustrated in figure 14, where the moving means 14 are accessible and operable from the outside of the pod 3 via openable hatches 25 provided between the pod 3 and the marine vessel 2. It is also possible that the moving means 14 that is provided can be remotely operable from the inside of the pod 3, such as from a position within a strut (not marked with a reference numeral) of the pod 3, which strut connect a gondola part (not marked with a reference numeral) of the pod 3 with the hull 4 of the marine vessel 5, wherein the method comprises operating the moving means 14 from the inside of the pod 3 such as from the strut of the pod 3

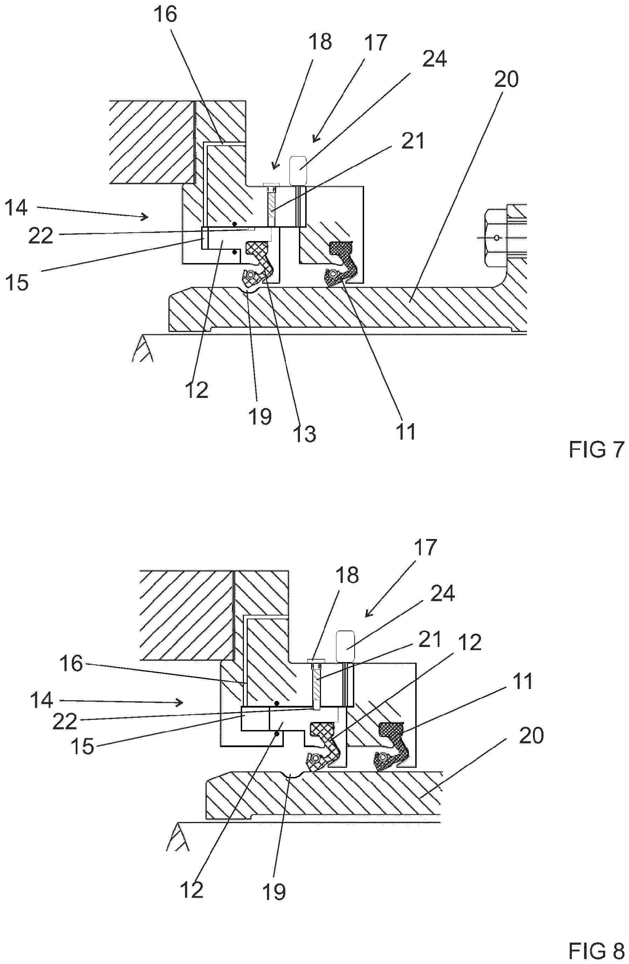

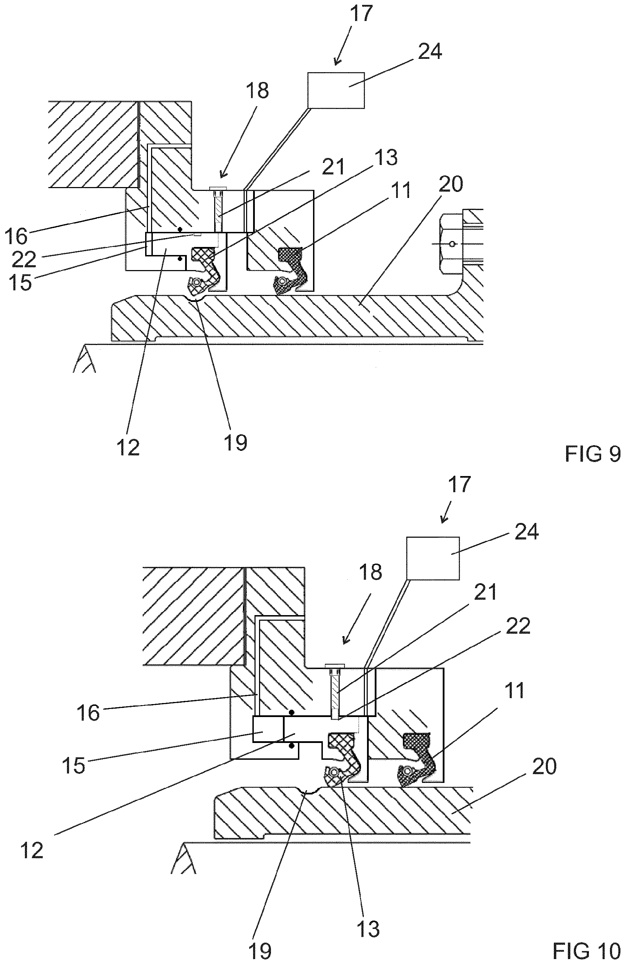

The method can include providing a verification means 17 for verifying that the moving means 14 has moved the ring member 12 with respect to the propeller shaft 1 so that the additional seal ring 13 has moved into the activated position, wherein the method includes giving a signal in response to that the moving means 14 has moved the ring member 12 with respect to the propeller shaft 1 so that the additional seal ring 13 has moved into the activated position. The verification means 17 that is provided can comprise an electrical limit switch 24 as illustrated in figures 7 and 9 or comprise a pneumatic system as illustrated in figures 9. In case the verification means 17 comprises a pneumatic system, the verification means 17 can be configured to for example notice a blocking or an opening of the verification means 17 as an indication that the additional seal ring 13 has moved into the activated position.

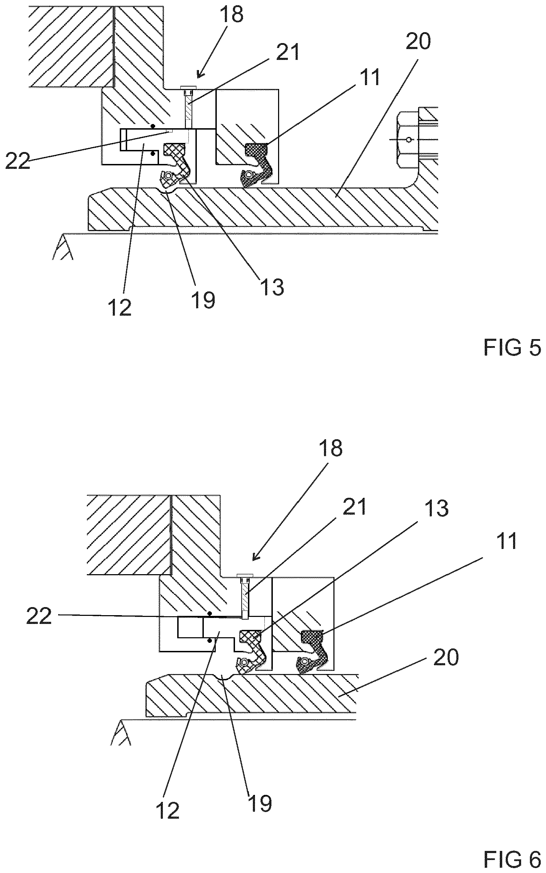

The method can include providing a locking means 18 that is operable to lock the ring member 12 with respect to the propeller shaft 1 where the additional seal ring 13 has been moved into the activated position, wherein the method includes locking the ring member 12 with respect to the propeller shaft 1 where the additional seal ring 13 has moved into the activated position. The locking means 18 that is provided can be configured to automatically lock the ring member 12 with respect to the propeller shaft 1 where the additional seal ring 13 has been moved into the activated position. The embodiments illustrated in figures 5 to 10 comprises locking means 18 configured to automatically lock the ring member 12 with respect to the propeller shaft 1 where the additional seal ring 13 has been moved into the activated position. In the embodiments illustrated in figures 5 to 10, the locking means 18 that is provided comprises a pin 21 that is configured to drop into a blind hole 22 in the ring member 12 when the additional seal ring 13 has been moved into the activated position. It is also possible that the locking means 18 that is provided is manually operable, wherein the method comprises manually locking the ring member 12 with respect to the propeller shaft 1 where the additional seal ring 13 has moved into the activated position.

The method can include providing the propeller shaft 1, or the liner 20 of the propeller shaft 1 if the propeller shaft 1 comprises such liner 20, with a circumferential groove 19 at the axial location of the propeller shaft 1 where the additional seal ring 13 is axially located in the inactivated position of the additional seal ring 13. A purpose of the circumferential groove 19 is to prevent the additional seal ring 13 from engaging the outer circumference of the propeller shaft 11 in the inactivated position of the additional seal ring 13 and so to prevent wearing of the additional seal ring 13 in the inactivated position of the additional seal ring 13.

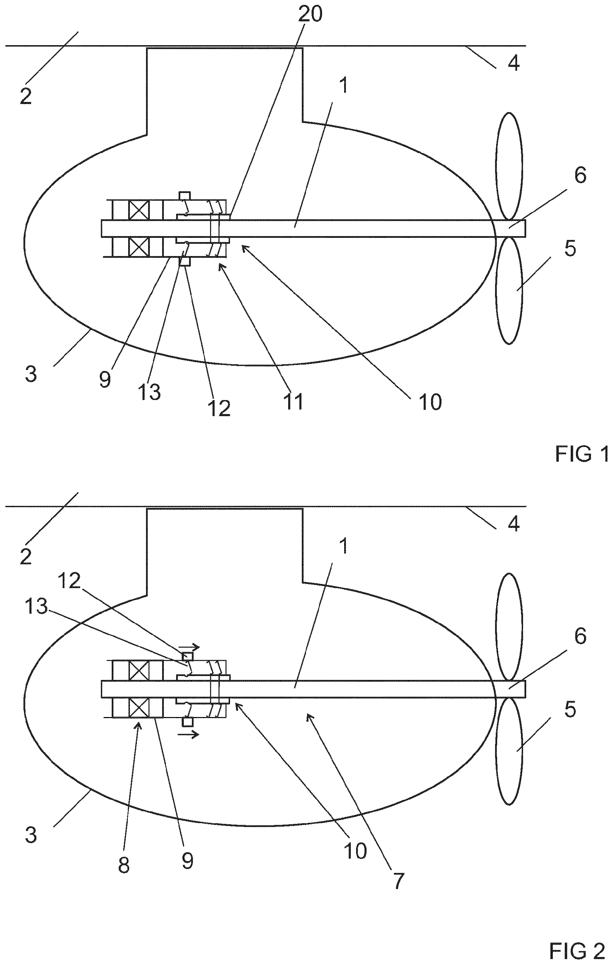

In the first embodiment of the method illustrated in figures 1 and 2, the bearing housing 9 is arranged close to a so-called non-driving end of the propeller shaft 1. In the first embodiment of the method illustrated in figures 1 and 2, the seal rings 11 and/or the additional seal ring 13 can for example be oil-oil seals or oil-air seals.

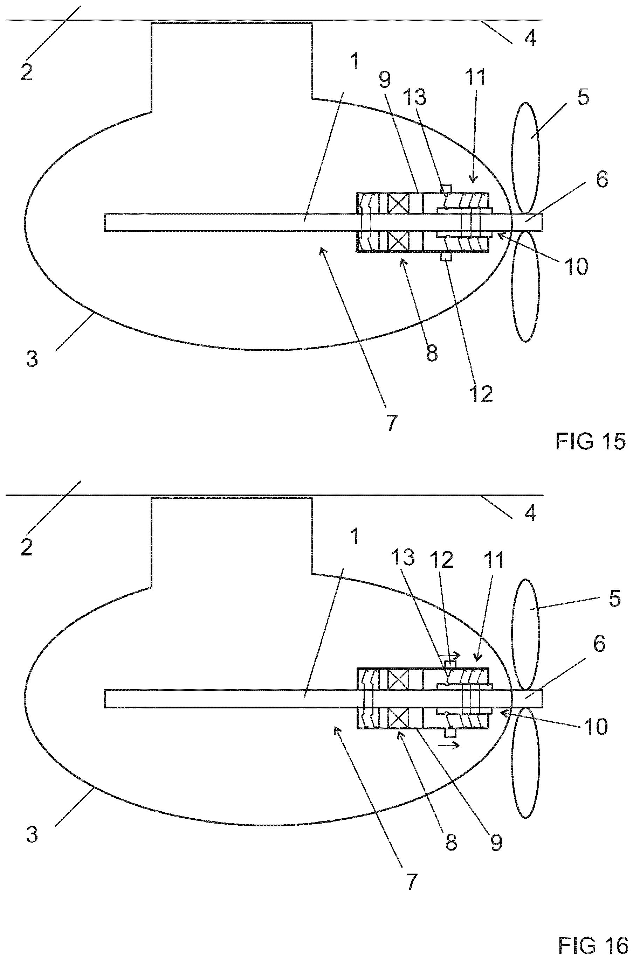

In the eighth embodiment of the method illustrated in figures 15 and 16, the bearing housing 9 is arranged close to the driving end 6 of the propeller shaft 1, where the propeller shaft 1 projects out of the pod 3. In the first embodiment of the method illustrated in figures 1 and 2, the seal rings 11 and/or the additional seal ring 13 can for example be oil-oil seal rings, or oil-air seal rings or air-water-seal rings.

Next the arrangement for sealing a propeller shaft 1 of a marine vessel 2 and some embodiments and variants of the arrangement will be described in greater detail.

The propeller shaft 1 is arranged at a pod 3 that is suspended at a hull 4 of the marine vessel 2.

The pod 3 can be fixedly suspended at the hull 4 of the marine vessel 2. It is also possible that the pod 3 is about a pivot axis (not illustrated) suspended at the hull 4 of the marine vessel 2. Inside the pod 3 can an electric motor (not illustrated) be provided for rotating the propeller shaft 1. It is also possible that the pod comprises a mechanical power transmission arrangement for rotating the propeller shaft 1 by means of a motor arranged as housed by the hull 4 of the marine vessel 1.

A propeller 5 is attached to a driving end 6 of the propeller shaft 1, wherein the 6 projects out of the pod 3. The propeller shaft 1 can additionally have a second driving end (not illustrated) that projects out of an opposite end of the pod 3 i.e. so that the propeller projects through the pod and so that a second propeller (not illustrated) is provided as the second driving end.

The propeller shaft 1 has a non driving section 7 that is inside the pod 3.

The propeller shaft 1 is rotatable supported with at least one bearing 8 that is arranged in a bearing housing 9 in the pod 3.

The bearing housing 9 has an opening 10.

The propeller shaft 1 projects out of the opening 10 of the bearing housing 9.

At least one seal ring 11 is provided between the opening 10 of the bearing housing 9 and said at least one bearing 8 that is arranged in the bearing housing 9, wherein said at least one seal ring 11 is attached to the bearing housing 9 and engaging the outer circumference of the propeller shaft 1.

The propeller shaft 1 can comprise a liner 20 that at least partly forms the outermost part of the propeller shaft 1. In the figures, the liner 20 forms the outermost part of the propeller shaft 1 at least in the region of the seal rings 11.

The bearing housing 9 is provided with a ring member 12 that surrounds the propeller shaft 1 and that is movable with respect to the propeller shaft 1, preferably, but not necessarily, in an axial direction of the propeller shaft 1. It is also possible that the ring member 12 is movable in a radial direction with respect to the propeller shaft 1 or in a combination of a radial and an axial direction with respect to the propeller shaft 1. It is also possible that the ring member 12 comprises at least two arcs (nor illustrated in the figures) movable with respect to one another and with respect to the propeller shaft 1 and which at least two arcs together forms the ring member 12.

An additional seal ring 13 is provided at the ring member 12 and so that the additional seal ring 13 surrounds the propeller shaft 1. The additional seal ring 13 can be a separate part that is attached to the ring member 12. It is also possible that the additional seal ring 13 and the ring member 12 forms a monolithic structure so that the additional seal ring 13 is an integrated part of the ring member 12.

A moving means 14 is provided for moving the ring member 12 with respect to the propeller shaft 1, preferably, but not necessarily, in an axial direction of the propeller shaft 1 so that the additional seal ring 13 moves from an inactivated position, where the additional seal ring 13 is spaced apart from the outer circumference of the propeller shaft 1 and/or is in an sealingly unengaging position with the outer circumference of the propeller shaft 1 into an activated position where the additional seal ring 13 engages the outer circumference of the propeller shaft 1. Sealingly unengaging position with the outer circumference of the propeller shaft 1 means in this context that there can be a light contact between the additional seal ring 13 and the outer circumference of the propeller shaft 1, which light contact is uncapable of preventing fluid from passing between the outer circumference of the propeller shaft 1 and the additional seal ring 13.

Because of the provision of the ring member 12 having an additional seal ring 13 attached thereto and because of the provision of the moving means 14 for moving the ring member 12 with respect to the propeller shaft 1 so that the additional seal ring 13 moves from an inactivated position, where the additional seal ring 13 is spaced apart from the outer circumference of the propeller shaft 1 into an activated position where the additional seal ring 13 engages the outer circumference of the propeller shaft 1, a worn out seal ring 11 can easily be replaced also in situations where limited access to the worn out seal ring 11 is available.

The bearing housing 9 can comprise a ring chamber 15 so that the ring chamber 15 surrounding the propeller shaft 1 and so that the ring chamber 15 being partly limited by the ring member 12, and the moving means 14 can comprise a fluid feeding means 16 for feeding fluid into the ring chamber 15 to effect moving of the ring member 12 to effect moving of the additional seal ring 13 from the inactivated position into the activated position.

The moving means 14 can comprise one of a hydraulic moving means, a mechanical moving means, a pneumatic moving means, and an electromechanical moving means or a combination of at least two of a hydraulic moving means, a mechanical moving means, a pneumatic moving means, and an electromechanical moving means for moving of the ring member 12 to effect moving of the additional seal ring 13 from the inactivated position into the activated position. The moving means 14 can for example comprise at least one of at least one hydraulic or pneumatic cylinder and at least one mechanical or electromechanical actuator.

The moving means 14 is preferably, but not necessarily, remotely operable from the outside of the pod 3 such as from the marine vessel 2, as illustrated in figure 14, where the moving means 14 are accessible and operable from the outside of the pod 3 via openable hatches 25 provided between the pod 3 and the marine vessel 2. It is also possible that the moving means 14 is remotely operable from the inside of the pod 3, such as from a position within a strut (not marked with a reference numeral) of the pod 3, which strut connects a gondola part (not marked with a reference numeral) of the pod 3 with the hull 4 of the marine vessel 5, wherein the method comprises operating the moving means 14 from the inside of the pod 3 such as from the strut of the pod 3.

A verification means 17 for verifying that the moving means 14 has moved the ring member 12 with respect to the propeller shaft 1 so that the additional seal ring 13 has moved into the activated position is preferably, but not necessarily, provided. The verification means 17 can for example comprise an electrical limit switch 24 as in figures 7 and 8 or a pneumatic system 23 as in figures 9 and 10. In case the verification means 17 comprises a pneumatic system, the verification means 17 can be configured to for example notice a blocking or an opening of the verification means 17 as an indication that the additional seal ring 13 has moved into the activated position.

Th arrangement can comprise a locking means 18 that is operable to lock the ring member 12 with respect to the propeller shaft 1 where the additional seal ring 13 has been moved into the activated position. Such locking means 18 can be configured to automatically lock the ring member 12 with respect to the propeller shaft 1 when the additional seal ring 13 has been moved into the activated position. The embodiments illustrated in figures 5 to 10 comprises locking means 18 configured to automatically lock the ring member 12 with respect to the propeller shaft 1 where the additional seal ring 13 has been moved into the activated position. In the embodiments illustrated in figures 5 to 10, the locking means 18 comprises a pin 21 that is configured to drop into a blind hole 22 in the ring member 12 when the additional seal ring 13 has been moved into the activated position. The locking means 18 can alternatively be manually operable.

The propeller shaft 1, or the liner 20 of the propeller shaft 1 if the propeller shaft 1 comprises such liner 20, can be provided with a circumferential groove 19 at the axial location of the propeller shaft 1 where the additional seal ring 13 axially located is in the inactivated position of the additional seal ring 13. A purpose of the circumferential groove 19 is to prevent the additional seal ring 13 from engaging the outer circumference of the propeller shaft 11 in the inactivated position of the additional seal ring 13 and so to prevent wearing of the additional seal ring 13 in the inactivated position of the additional seal ring 13.

In the first embodiment of the arrangement illustrated in figures 1 and 2, the bearing housing 9 is arranged close to a so-called non-driving end of the propeller shaft 1. In the first embodiment of the arrangement illustrated in figures 1 and 2, the seal rings 11 and/or the additional seal ring 13 can for example be oil-oil seal rings or oil-air seal rings.

In the eighth embodiment of the arrangement illustrated in figures 15 and 16, the bearing housing 9 is arranged close to the driving end 6 of the propeller shaft 1, where the propeller shaft 1 projects out of the pod 3. In the first embodiment of the arrangement illustrated in figures 1 and 2, the seal rings 11 and/or the additional seal ring 13 can for example be oil-oil seal rings, or oil-air seal rings or air-water-seal rings.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for sealing a propeller shaft (1) of a marine vessel (2),
wherein the propeller shaft (1) is arranged at a pod (3) that is suspended at a hull (4) of the marine vessel (2),
wherein a propeller (5) is attached to a driving end (6) of the propeller shaft (1), wherein the driving end (6) projects out of the pod (3), and
wherein the propeller shaft (1) has a non-driving section (7) that is inside the pod (3),
wherein the propeller shaft (1) is rotatable supported with at least one bearing (8) that is arranged in a bearing housing (9) in the pod (3),
wherein the bearing housing (9) has an opening (10),
wherein the propeller shaft (1) projects out of the opening (10) of the bearing housing (9), and
wherein at least one seal ring (11) is provided between the opening (10) of the bearing housing (9) and said at least one bearing (8) that is arranged in the bearing housing (9), wherein said at least one seal ring (11) is attached to the bearing housing (9) and engaging the outer circumference of the propeller shaft (1),
**characterized**
**by** providing the bearing housing (9) with a ring member (12) that surrounds the propeller shaft (1) and that is movable with respect to the propeller shaft (1),
by providing an additional seal ring (13) at the ring member (12) so that the additional seal ring (13) surrounds the propeller shaft (1) between the opening (10) of the bearing housing (9) and said at least one bearing (8) that is arranged in the bearing housing (9),
by providing a moving means (14) for moving the ring member (12) with respect to the propeller shaft (1) so that the additional seal ring (13) moves from an inactivated position, where the additional seal ring (13) is spaced apart from the outer circumference of the propeller shaft (1) and/or is in an sealingly unengaging position with the outer circumference of the propeller shaft (1) into an activated position where the additional seal ring (13) engages the outer circumference of the propeller shaft (1), and
by moving the ring member (12) with respect to the propeller shaft (1) by means of moving means (14) so that the additional seal ring (13) moves from the inactivated position into the activated position.

2. The method according to claim 1, **characterized**
**by** providing the bearing housing (9) with a ring chamber (15) so that the ring chamber (15) surrounding the propeller shaft (1) and so that the ring chamber (15) being partly limited by the ring member (12), and
by the moving means (14) that is provided comprises a fluid feeding means (16) for feeding fluid into the ring chamber (15) to effect moving of the ring member (12) to effect moving of the additional seal ring (13) from the inactivated position into the activated position.

3. The method according to claim 1 or 2, **characterized**
**by** the moving means (14) that is provided comprises one of a mechanical moving means an electromechanical moving means, a pneumatic moving means, and a hydraulic moving means.

4. The method according to any of the claims 1 to 3, **characterized**
**by** the moving means (14) that is provided being remotely operable from the outside of the pod (3), and
by operating the moving means (14) from the outside of the pod (3).

5. The method according to any of the claims 1 to 4, **characterized**
**by** providing a verification means (17) for verifying that the moving means (14) has moved the ring member (12) with respect to the propeller shaft (1) so that the additional seal ring (13) has moved into the activated position, and
by giving a signal in response to that the moving means (14) has moved the ring member (12) with respect to the propeller shaft (1) so that the additional seal ring (13) has moved into the activated position.

6. The method according to claim 5, **characterized**
**by** the verification means (17) that is provided comprises an electrical limit switch.

7. The method according to claim 5, **characterized**
**by** the verifications means (17) that is provided comprises a pneumatic system.

8. The method according to any of the claims 1 to 7, **characterized**
**by** providing a locking means (18) that is operable to lock the ring member (12) with respect to the propeller shaft (1) where the additional seal ring (13) has been moved into the activated position, and
by locking the ring member (12) with respect to the propeller shaft (1) where the additional seal ring (13) has moved into the activated position.

9. The method according to claim 8, **characterized**
**by** the locking means (18) that is provided is operable so that it configured to automatically lock the ring member (12) with respect to the propeller shaft (1) where the additional seal ring (13) has been moved into the activated position.

10. The method according to claim 8, **characterized**
**by** the locking means (18) that is provided is manually operable, and
by manually locking the ring member (12) with respect to the propeller shaft (1) where the additional seal ring (13) has moved into the activated position.

11. The method according to any of the claims 1 to 10, **characterized**
**by** providing the propeller shaft (1) with a circumferential groove (19) at the axial location of the propeller shaft (1) where the additional seal ring (13) is axially located in the inactivated position of the additional seal ring (13).

12. An arrangement for sealing a propeller shaft (1) of a marine vessel (2),
wherein the propeller shaft (1) is arranged at a pod (3) that is suspended at a hull (4) of the marine vessel (2),
wherein a propeller (5) is attached to a driving end (6) of the propeller shaft (1), wherein the driving end (6) projects out of the pod (3), and
wherein the propeller shaft (1) has a non-driving section (7) that is inside the pod (3),
wherein the propeller shaft (1) is rotatable supported with at least one bearing (8) that is arranged in a bearing housing (9) in the pod (3),
wherein the bearing housing (9) has an opening (10),
wherein the propeller shaft (1) projects out of the opening (10) of the bearing housing (9), and
wherein at least one seal ring (11) is provided between the opening (10) of the bearing housing (9) and said at least one bearing (8) that is arranged in the bearing housing (9), wherein said at least one seal ring (11) is attached to the bearing housing (9) and engaging the outer circumference of the propeller shaft (1),
**characterized**
**by** the bearing housing (9) being provided with a ring member (12) that surrounds the propeller shaft (1) and that is movable with respect to the propeller shaft (1),
by an additional seal ring (13) being provided at the ring member (12) so that the additional seal ring (13) surrounds the propeller shaft (1), and
by a moving means (14) for moving the ring member (12) with respect to the propeller shaft (1) so that the additional seal ring (13) moves from an inactivated position, where the additional seal ring (13) is spaced apart from the outer circumference of the propeller shaft (1) and/or is in an sealingly unengaging position with the outer circumference of the propeller shaft (1) into an activated position where the additional seal ring (13) engages the outer circumference of the propeller shaft (1).

13. The arrangement according to claim 12, **characterized**
**by** the bearing housing (9) comprises a ring chamber (15) so that the ring chamber (15) surrounding the propeller shaft (1) and so that the ring chamber (15) being partly limited by the ring member (12), and
by the moving means (14) comprises a fluid feeding means (16) for feeding fluid into the ring chamber (15) to effect moving of the ring member (12) to effect moving of the additional seal ring (13) from the inactivated position into the activated position.

14. The arrangement according to claim 12 or 13, **characterized**
**by** the moving means (14) comprises one of a mechanical moving means, an electromechanical moving means, a pneumatic moving means, and a hydraulic moving means for moving of the ring member (12) to effect moving of the additional seal ring (13) from the inactivated position into the activated position.

15. The arrangement according to any of the claims 12 to 14, **characterized**
**by** the moving means (14) being remotely operable from the outside of the pod (3).

16. The arrangement according to any of the claims 12 to 15, **characterized**
**by** a verification means (17) for verifying that the moving means (14) has moved the ring member (12) with respect to the propeller shaft (1) so that the additional seal ring (13) has moved into the activated position.

17. The arrangement according to claim 16, **characterized**
**by** the verifications means (17) comprises an electrical limit switch.

18. The arrangement according to claim 16, **characterized**
**by** the verifications means (17) comprises a pneumatic system.

19. The arrangement according to any of the claims 12 to 18, **characterized**
**by** a locking means (18) that is operable to lock the ring member (12) with respect to the propeller shaft (1) where the additional seal ring (13) has been moved into the activated position.

20. The arrangement according to claim 19, **characterized**
**by** the locking means (18) is configured to automatically lock the ring member (12) with respect to the propeller shaft (1) where the additional seal ring (13) has been moved into the activated position.

21. The arrangement according to claim 19, **characterized**
**by** the locking means (18) that is provided is manually operable.

22. The arrangement according to any of the claims 12 to 21, **characterized**
**by** the propeller shaft (1) being provided with a circumferential groove (19) at the axial location of the propeller shaft (1) where the additional seal ring (13) axially located is in the inactivated position of the additional seal ring (13).
